# FASCICULE DE BREVET EUROPEEN

(11) **EP 1 789 255 B1**
(45) Date de publication et mention de la délivrance du brevet: **21.03.2018**
(21) Numéro de dépôt: 05797605.2
(22) Date de dépôt: 31.08.2005
(51) Int. Cl.: B32B 17/10, C03C 17/36, C03C 27/12

(54) **VITRAGE FEUILLETE MUNI D'UN EMPILEMENT DE COUCHES MINCES REFLECHISSANT LES INFRAROUGES ET/OU LE RAYONNEMENT SOLAIRE ET D'UN MOYEN DE CHAUFFAGE.**
BESCHICHTETE VERGLASUNG MIT EINEM STAPEL AUS DÜNNEN SCHICHTEN, DIE INFRAROTSTRAHLEN UND/ODER SONNENSTRAHLUNG REFLEKTIEREN, UND EIN HEIZSYSTEM
LAMINATED GLAZING COMPRISING A STACK OF THIN LAYERS REFLECTING THE INFRARED RAYS AND/OR THE SOLAR RADIATION, AND A HEATING MEANS

(30) Priorité: 31.08.2004 FR 0451947
(43) Date de publication de la demande: 30.05.2007
(73) Titulaire: Saint-Gobain Glass France, 92400 Courbevoie (FR)
(72) Inventeur: LECONTE, Jean-Gérard, 92400 Courbevoie (FR)
(74) Mandataire: Saint-Gobain Recherche
(86) Numéro de dépôt international: PCT/FR2005/050693
(87) Numéro de publication internationale: WO 2006/024809

(56) Documents cités:
- EP-A- 0 506 521
- EP-A- 0 643 548
- EP-A- 1 010 677
- WO-A-01/37006
- WO-A-01/81262
- WO-A-03/010105
- WO-A-2004/005210
- FR-A- 2 762 541
- FR-A- 2 781 789
- US-A- 4 065 848
- US-A- 4 228 425

## Description

L'invention concerne les vitrages incorporant d'une part au moins un substrat transparent, en verre ou en matière organique, qui est muni de moyens pouvant agir sur le rayonnement solaire et/ou le rayonnement infrarouge de grande longueur d'onde et d'autre part un moyen de chauffage.

L'invention se rapporte plus particulièrement à un vitrage feuilleté, notamment pour pare-brise ou pour vitrage latéral avant de véhicule, et plus particulièrement de véhicule automobile, ce vitrage feuilleté comportant au moins une feuille de polymère thermoplastique intercalaire positionnée entre deux substrats verriers, chaque substrat verrier présentant ainsi respectivement une face tournée vers ladite feuille intercalaire, ledit vitrage présentant des propriétés de réflexion dans l'infrarouge et/ou dans le rayonnement solaire.

L'invention s'intéresse par ailleurs aux vitrages chauffant. Un vitrage chauffant est un vitrage dont la température peut s'élever lorsqu'il est soumis à un courant électrique. Ce type de vitrage trouve des applications dans l'automobile pour la réalisation de vitres qui permettent d'empêcher la formation, et/ou de supprimer, du givre et/ou de la buée.

L'invention s'intéresse plus particulièrement, mais pas uniquement, aux moyens à propriétés de réflexion dans l'infrarouge et/ou dans le rayonnement solaire constitués d'un empilement alternant au moins une couche métallique fonctionnelle notamment à base d'argent et des couches en matériau diélectrique du type oxyde métallique ou nitrure de silicium.

Elle s'intéresse encore plus particulièrement aux vitrages incorporant au moins un substrat muni d'un tel empilement, ce substrat devant subir des opérations de transformation impliquant au moins un traitement thermique à au moins 500°C : il peut notamment s'agir d'une trempe, d'un recuit ou d'un bombage.

Plutôt que de déposer les couches minces constituant l'empilement à couche(s) métallique(s) fonctionnelle(s) sur le substrat après son traitement thermique (ce qui pose des problèmes technologiques importants), on a, dans un premier temps, cherché à adapter les empilements de couches pour qu'ils puissent subir de tels traitements tout en gardant l'essentiel de leurs propriétés thermiques. Le but était donc d'éviter la détérioration des couches fonctionnelles, les couches à base d'argent notamment. Une solution, exposée dans le brevet EP-506 507, consiste à protéger les couches d'argent en les encadrant par des couches métalliques venant protéger les couches d'argent. On a alors un empilement bombable ou trempable, dans la mesure où il est au moins aussi performant dans la réflexion des infrarouges ou du rayonnement solaire avant qu'après le bombage ou la trempe. Cependant, l'oxydation / la modification des couches ayant protégé les couches d'argent sous l'effet de la chaleur conduisent à modifier sensiblement les propriétés optiques de l'empilement, notamment en induisant une augmentation de la transmission lumineuse et une modification de la colorimétrie en réflexion. Ce traitement thermique tend également à créer des défauts optiques : des piqûres et/ou diverses altérations de petite taille conduisant à un niveau de flou significatif (on entend généralement par "altérations de petite taille" des défauts de taille inférieure à 5 micromètres, tandis que des "piqûres" s'entendent par des défauts de taille au-delà de 50 micromètres, notamment entre 50 et 100 micromètres, avec bien sûr la possibilité d'avoir également des défauts de taille intermédiaire, c'est-à-dire entre 5 et 50 micromètres).

Dans un second temps, on a alors cherché à mettre au point de tels empilements de couches minces qui soient capables de conserver à la fois leurs propriétés thermiques et leurs propriétés optiques après traitement thermique, en minimisant toute apparition de défauts optiques. L'enjeu était d'avoir ainsi des empilements de couches minces à performances optiques/thermiques fixes, qu'ils aient ou non à subir des traitements thermiques.

Une première solution a été proposée dans le brevet EP-718 250. Elle préconise d'utiliser au-dessus de la ou des couches fonctionnelles à base d'argent des couches-barrière à la diffusion de l'oxygène, notamment à base de nitrure de silicium, et de déposer directement les couches d'argent sur le revêtement diélectrique sous-jacent, sans interposition de couches de primage ou de couches métalliques de protection. Ce brevet divulgue des empilements du type :

Si₃N₄/ZnO/Ag/Nb/ZnO/Si₃N₄

ou

SnO₂/ZnO/Ag/Nb/Si₃N₄

Une seconde solution a été proposée dans le brevet EP-847 965 : elle est davantage axée sur des empilements comprenant deux couches d'argent, et décrit l'utilisation à la fois d'une couche-barrière au-dessus des couches d'argent (comme précédemment) et d'une couche absorbante ou stabilisante, adjacente auxdites couches d'argent et permettant de les stabiliser.

Elle décrit des empilements du type
SnO₂/ZnO/Ag/Nb/Si₃N₄/ZnO/Ag/Nb/WO₃ ou ZnO ou SnO₂/Si₃N₄

Dans les deux solutions, on remarque la présence de la couche métallique, en niobium en l'occurrence, sur les couches d'argent, permettant d'éviter aux couches d'argent le contact avec une atmosphère réactive oxydante ou nitrurante lors du dépôt par pulvérisation réactive respectivement de la couche de ZnO ou de la couche de Si₃N₄.

Ces solutions sont satisfaisantes dans la plupart des cas. Cependant, on a de plus en plus besoin d'avoir des verres aux galbes très prononcés et/ou de forme complexe (double courbure, courbure en forme de S ...). C'est tout particulièrement le cas des verres servant à faire des pare-brise automobiles ou des vitrines. Et dans ce cas, on impose aux verres des traitements localement différenciés, sur le plan thermique et/ou mécanique, comme cela est notamment décrit dans les brevets FR- 2 599 357, US-6 158 247, US-4 915 722 ou US-4 764 196. Cela est particulièrement sollicitant pour les empilements de couches minces : on peut alors avoir l'apparition de défauts optiques localisés, de légères variations d'aspect en réflexion d'un point à un autre du vitrage.

Une solution a permis d'améliorer les empilements de couches minces décrits plus haut, notamment en améliorant leur comportement face à des traitements thermiques sollicitant du type bombage et/ou trempe. La demande internationale N° WO 03/010105 divulgue ainsi une solution permettant de conserver les performances thermiques des empilements tout en minimisant toute modification optique de ceux-ci, toute apparition de défauts optiques, particulièrement tout en conservant l'homogénéité d'aspect optique des verres revêtus après traitement thermique, d'un verre à un autre et/ou d'une zone à une autre d'un même verre, et ceci même en cas de traitement localement différencié d'un point à un autre du vitrage. Cette solution permet alors de limiter au mieux toute variation optique d'un point à un autre du vitrage, notamment, dans le cas d'un verre devant être bombé, d'une zone faiblement ou non bombée à une zone fortement bombée.

Cette solution va à l'encontre de ce qui se faisait usuellement, puisqu'elle propose de supprimer la couche métallique « sacrificielle » au-dessus des couches fonctionnelles, en argent notamment, et qu'elle la déplace pour la disposer en dessous de celles-ci.

Des problèmes particuliers se posent lorsque l'on souhaite associer à l'intérieur d'un même vitrage un moyen à propriétés de réflexion dans l'infrarouge et/ou dans le rayonnement solaire, constitué notamment d'un empilement de couches minces et un moyen de chauffage.

Cette association pose d'abord un problème d'industrialisation : chacun des moyens, d'une part à propriétés de réflexion dans l'infrarouge et/ou dans le rayonnement solaire et d'autre part de chauffage étant en général associé à un substrat, la question se pose de savoir si ces deux moyens peuvent être associés au même substrat ou s'ils doivent être associés à des substrats différents et en l'occurrence lesquels (substrat extérieur, feuille intercalaire, feuille centrale, ..., substrat intérieur).

Cette association pose en outre un problème d'obtention ou de conservation des propriétés optiques de couleur, transmission lumineuse T_{L}, ... et énergétiques de réflexion énergétique R_{E}.

La présente invention a pour but de proposer une solution aux problèmes posés par l'art antérieur et se rapporte ainsi, dans son acception la plus large, à un vitrage feuilleté selon la revendication 1. Dans ce vitrage, un moyen de chauffage présentant une capacité de puissance d'au moins 400 Watt/m², voire d'au moins 500 Watts/m² est associé à la face (2) du vitrage feuilleté, un moyen à propriétés de réflexion dans l'infrarouge et/ou dans le rayonnement solaire est associé à la face (3) du vitrage feuilleté et ledit vitrage présente une transmission lumineuse T_{L} d'au moins 70 %, voire d'au moins 75 %, cette T_{L} étant mesurée d'une manière habituelle perpendiculairement au plan moyen du vitrage.

Dans tout le texte du présent document, les faces des deux substrats verriers intégrés dans le vitrage feuilleté sont numérotées de manière conventionnelle 1, 2, 3 et 4 en allant de l'extérieur du vitrage, c'est-à-dire du côté disposé à l'extérieur lorsque ce vitrage est monté dans une baie de carrosserie, vers l'intérieur.

Ledit moyen de chauffage est positionné contre la face de la feuille intercalaire qui est orientée vers l'extérieur.

Ledit moyen à propriétés de réflexion dans l'infrarouge et/ou dans le rayonnement solaire est positionné sur la face du substrat intérieur qui est orientée vers l'extérieur du véhicule.

L'invention peut s'appliquer à des moyens à propriétés de réflexion dans l'infrarouge et/ou dans le rayonnement solaire constitués par exemple par des films à propriétés de réflexion dans l'infrarouge et/ou dans le rayonnement solaire.

Toutefois, le moyen à propriétés de réflexion dans l'infrarouge et/ou dans le rayonnement solaire est, de préférence, constitué d'un empilement de couches minces comportant une alternance de n couches fonctionnelles A à propriétés de réflexion dans l'infrarouge et/ou dans le rayonnement solaire, notamment métalliques, et de n+1 revêtements B avec n ≥ 1. Lesdits revêtements B comportent une ou une superposition de couches en matériau diélectrique, de manière à ce que chaque couche fonctionnelle A soit disposée entre deux revêtements B.

L'empilement présente en outre, de préférence, les caractéristiques suivantes :
La (ou au moins une des) couche(s) fonctionnelle(s) A est en contact avec le revêtement diélectrique B disposé au-dessus et/ou en dessous d'elle par l'intermédiaire d'une couche C absorbante au moins dans le visible, du type métallique éventuellement nitruré ; toutefois, dans une version particulière, seul le revêtement diélectrique B disposé au-dessous de la (ou d'au moins une des) couche(s) fonctionnelle(s) A est en contact avec elle par l'intermédiaire d'une couche C absorbante au moins dans le visible, du type métallique éventuellement nitruré.

De préférence même, chacune des couches fonctionnelles A est directement en contact avec le revêtement diélectrique B disposé au-dessus d'elle, et chacune des couches fonctionnelles A est en contact avec le revêtement diélectrique B disposé au-dessous d'elles par l'intermédiaire d'une couche C absorbante au moins dans le visible, du type métallique éventuellement nitruré.

L'invention s'applique ainsi à des empilements de couches minces intégrant au moins une couche fonctionnelle métallique et de préférence plusieurs couches fonctionnelles métalliques, cette ou ces couches étant notamment à base d'argent.

Dans tout le reste du document, on parlera indifféremment de couche d'argent, de couche Ag, de couche à base d'argent ou de couche fonctionnelle A, par souci de concision, sachant que les couches à base d'argent sont les plus usuelles pour les applications envisagées dans l'invention, mais que l'invention s'applique de façon identique à d'autres couches métalliques réfléchissantes, comme des alliages d'argent, contenant notamment du titane et/ou du palladium, ou des couches à base d'or.

Dans le cas des empilements de couches minces à couche fonctionnelle A à base d'argent, avantageusement l'épaisseur de la ou des couches absorbantes C est inférieure ou égale à 1 nm, notamment inférieure ou égale à 0,7 ou 0,6 ou 0,5 nm. Elle est par exemple d'environ 0,2 à 0,5 nm. Le terme de « couche » est alors à prendre au sens large. En effet, des couches si minces peuvent ne pas être continues, elles forment davantage des îlots sur la couche sous-jacente.

Cette extrême minceur a plusieurs atouts : la couche peut jouer son rôle de "piège" vis-à-vis d'espèces agressives à l'encontre du matériau de la couche fonctionnelle A, en l'occurrence de l'argent pendant les traitements thermiques. Par contre, elle ne pénalise que très peu l'empilement en termes de perte de transmission lumineuse, et elle se dépose vite par pulvérisation cathodique. Plus important peut-être, le cas échéant : sa minceur fait qu'elle « n'interfère pas » (ou très peu) sur l'interaction entre la couche Ag et la couche qui se trouve sous cette couche absorbante.

Si cette couche sous-jacente a un effet « mouillant » vis-à-vis de la couche d'argent (par exemple quand il s'agit de couches à base d'oxyde de zinc comme cela sera détaillé plus loin), celle-ci pourra conserver cet effet avantageux malgré la présence de la couche intermédiaire absorbante.

Dans une configuration à plusieurs couches absorbantes C, on a de préférence la couche C la plus éloignée du substrat qui est plus épaisse que les autres. On peut avoir un gradient dans les épaisseurs des couches C : plus elles s'éloignent de leur substrat porteur, plus elles sont épaisses. Cela peut se justifier par le fait que la dernière couche absorbante C peut ainsi aider à protéger les couches fonctionnelles A qui ont été déposées avant elles. Dans un empilement avec deux couches C et deux couches A, on peut aussi avoir un rapport d'épaisseur entre la seconde couche absorbante et la première aux environs des 2/3 - 1/3 (par exemple de 75-25 à 55-45 en pourcentage d'épaisseur).

La ou les couches C absorbantes selon l'invention sont de préférence à base de titane Ti, de nickel Ni, de chrome Cr, de niobium Nb, de zirconium Zr ou d'un alliage métallique contenant au moins l'un de ces métaux : le titane s'est avéré particulièrement approprié.

Avantageusement, au moins un (en particulier chacun) des revêtements B qui se trouve directement au-dessus d'une couche fonctionnelle A commence par une couche D à base d'oxyde(s) métallique(s). Cela revient à dire qu'il y a un contact direct entre la ou chacune des couches fonctionnelles et la couche d'oxyde(s) métallique(s) qui la surmonte (ou au moins pour l'une des couches fonctionnelles).

Cette couche d'oxyde peut remplir la fonction de stabilisation mentionnée dans le brevet EP-847 965 précité. Elle peut permettre de stabiliser l'argent, en particulier en cas de traitement thermique. Elle tend aussi à favoriser l'adhésion de l'ensemble de l'empilement. De préférence, il s'agit d'une couche à base d'oxyde de zinc ou d'un oxyde mixte de zinc et d'un autre métal (du type Al). Il peut aussi s'agir d'oxydes comprenant au moins un des métaux suivants : Al, Ti, Sn, Zr, Nb, W, Ta. Un exemple d'oxyde mixte de zinc susceptible d'être déposé en couche mince selon l'invention est un oxyde mixte de zinc et d'étain contenant un élément additionnel tel que de l'antimoine, tel que décrit dans WO 00/24686.

Cette couche D est de préférence d'épaisseur limitée ; elle est par exemple de 2 à 30 nm, notamment de 5 à 10 nm.

Avantageusement encore, au moins un (en particulier chacun) des revêtements B qui se trouve juste en dessous d'une couche fonctionnelle A se termine par une couche D' à base d'oxyde(s) métallique(s). Il peut s'agir du même oxyde de zinc ou oxyde mixte contenant du zinc que pour les couches D décrites plus haut. Par contre, il n'est pas nécessaire ici d'en contrôler la stoechiométrie en oxygène aussi précisément : les couches peuvent être des couches stoechiométriques. Les couches contenant du ZnO sont particulièrement intéressantes, car elles ont la propriété de bien mouiller l'argent, de faciliter sa croissance cristalline dans la mesure où le ZnO et l'argent cristallisent de façon similaire avec des paramètres de maille proches : l'argent va pouvoir croître de façon colonnaire sur une couche bien cristallisée. La cristallisation de l'oxyde de zinc se transfère alors à l'argent par un phénomène connu sous le terme d'hétéroépitaxie. Ce transfert de cristallisation, cette mouillabilité entre la couche contenant le ZnO et la couche Ag sont maintenus malgré l'interposition d'une couche absorbante C dans la mesure où cette dernière est suffisamment mince (au plus 1 nm). La couche D' a de préférence une épaisseur comprise entre 6 et 15 nm.

En résumé, les couches C stabilisent les couches d'Ag lors de traitements thermiques, sans diminuer leur aptitude à cristalliser et sans induire une absorption lumineuse trop forte, si l'on sélectionne de façon appropriée leur localisation et leur épaisseur. Les couches D' peuvent favoriser le nappage /la cristallisation des couches Ag (ce qui limite du même coup une cristallisation post-dépôt de l'argent, sous l'effet d'un traitement thermique, pouvant conduire à une évolution de ses propriétés), et les couches D peuvent servir à stabiliser l'argent, l'empêcher notamment de migrer sous forme d'îlots.

Pour éviter que les couches Ag ne se détériorent par diffusion à chaud d'oxygène provenant de l'atmosphère ambiante, il est préférable de prévoir au moins dans le (n + 1)^{ème} revêtement B (c'est-à-dire le dernier en comptant à partir du substrat), une couche apte à faire barrière à l'oxygène. Il s'agit de préférence de couches à base de nitrure d'aluminium et/ou de nitrure de silicium. Avantageusement, tous les revêtements B comprennent une telle couche-barrière. De cette façon, chacune des couches fonctionnelles A se trouve encadrée par deux couches-barrières à l'oxygène, mais qui peuvent aussi, éventuellement, être des barrières à la diffusion d'espèces migrant du verre, des alcalins notamment. De préférence, ces couches-barrières ont une épaisseur d'au moins 5 nm, notamment d'au moins 10 nm, par exemple comprise entre 15 et 50 nm ou entre 20 et 40 ou entre 22 et 30 nm quand elles ne se trouvent pas entre deux couches fonctionnelles. Elles sont de préférence d'une épaisseur sensiblement plus importante quand elles se trouvent entre deux couches fonctionnelles, en étant notamment d'une épaisseur d'au moins 10 nm, notamment d'au moins 40 nm, par exemple comprise entre 40 et 50 ou 70 nm.

Dans le cas d'un empilement comprenant au moins deux couches fonctionnelles A (n ≥ 2), l'épaisseur de chaque couche fonctionnelle peut être sensiblement identique et être inférieure à 15 nm ; par «sensiblement identique », on entend une différence de moins de 3 nm entre les épaisseurs de deux couches fonctionnelles adjacentes.

Dans le cas d'un empilement comprenant au moins deux couches fonctionnelles A (n ≥ 2) il est préférable qu'un revêtement B situé entre deux couches A (notamment le nième) soit relativement épais par exemple d'une épaisseur de l'ordre de 50 à 90 nm, en particulier de 70 à 90 nm.

Ce revêtement B peut inclure une couche-barrière à la diffusion telle que décrite ci-dessus d'une épaisseur de 0 à 70 nm, ou 0 à 65 nm, notamment de 2 à 35 nm, en particulier de 5 à 30 nm, le cas échéant associée à une couche d'oxyde D et/ou D' d'épaisseur(s) adaptée(s), notamment d'une couche D et/ou d'une couche D' d'une épaisseur totale de 15 à 90 nm, en particulier de 35 à 90 nm, notamment de 35 à 88 nm, plus particulièrement de 40 à 85 nm.

Un mode de réalisation non limitatif de l'invention consiste à prévoir un empilement comprenant une ou plusieurs fois la séquence :

.../ZnO/Ti/Ag/ZnO/...

le ZnO pouvant contenir un autre métal minoritaire par rapport à Zn du type Al, et le ZnO au-dessus de la couche Ag étant de préférence légèrement sous-stoechiométrique en oxygène (tout du moins avant traitement thermique post-dépôt).

On peut avoir deux fois cette séquence, dans un empilement du type :

Substrat/Si₃N₄ ⁽¹⁾/ZnO/Ti/Ag/ZnO/Si₃N₄ ⁽²⁾/ZnO/Ti/Ag/ZnO/Si₃N₄ ⁽³⁾

le Si₃N₄ pouvant contenir un autre métal ou élément minoritaire par rapport au Si, comme un métal (Al) ou du bore et/ou le ZnO pouvant contenir un métal minoritaire également par rapport au Zn du type Al ou du bore.

On peut, en variante, supprimer les couches (1) et/ou (2) de Si₃N₄. On peut, par exemple les remplacer par une couche d'oxyde (SnO₂, oxyde mixte de zinc et d'étain ...) ou épaissir en conséquence la couche de ZnO qui leur est adjacente.

De préférence, dans ce type d'empilement à deux couches d'argent, la couche à base de Si₃N₄ entre les deux couches d'argent est par exemple d'au moins 50 nm, notamment d'une épaisseur comprise entre 55 et 70 nm. Du côté opposé à chacune des couches d'argent, il est préférable de prévoir des couches à base de Si₃N₄ d'au moins 15 nm, notamment d'une épaisseur comprise entre 20 et 30 nm.

Avec une telle configuration d'empilement, les substrats revêtus selon l'invention peuvent subir des traitements de plus de 500°C en vue d'un bombage, d'une trempe ou d'un recuit notamment (même des traitements de bombage différenciés d'un point à un autre du substrat), avec une variation de transmission lumineuse ΔT_{L} (mesurée selon l'Illuminant D65) entre avant et après le bombage d'au plus 5 %, notamment d'au plus 4 % et/ou une variation de colorimétrie en réflexion ΔE* entre avant et après le bombage d'au plus 4, notamment d'au plus 3. ΔE est exprimé de la façon suivante dans le système de colorimétrie L, a*, b*: ΔE = (ΔL*² + Δa*² + Δb*²)^{½}. Ces valeurs de ΔE et de ΔT_{L} sont notamment vérifiées pour des vitrages à structure feuilletée du type : verre/feuille thermoplastique comme du PVB/empilement de couches /verre.

En outre, on remarque une excellente homogénéité d'aspect sur toute la surface du substrat revêtu.

Le substrat (en verre) revêtu peut ensuite être monté en vitrage feuilleté, en l'associant de façon connue avec un autre verre par l'intermédiaire d'une feuille au moins en polymère thermoplastique. L'empilement est disposé de façon à être en contact avec ladite feuille thermoplastique, à l'intérieur du vitrage, conformément à la première variante principale de l'invention.

Il peut aussi être monté en vitrage feuilleté dit asymétrique, en l'associant avec au moins une feuille de polymère du type polyuréthane à propriétés d'absorption d'énergie éventuellement associée à une autre couche de polymère à propriétés auto-cicatrisante (on peut se reporter aux brevets EP-132 198, EP-131 523 et EP-389 354 pour plus de détails sur ce type de feuilleté). Le vitrage feuilleté obtenu peut être utilisé comme pare-brise ou vitre latérale de véhicules.

Des vitrages feuilletés ainsi constitués manifestent une variation colorimétrique faible entre l'incidence normale et une incidence non normale, typiquement à 60°. Cette variation colorimétrique à incidence non normale s'exprime à partir des paramètres a*(0°), b*(0°) mesurés sous incidence de 0° (normale) et a*(60°), b*(60°) mesurés sous incidence de 60°. On note Δa*_{(0→60)}= |a*(60°) - a*(0°)| et Δb*_{(0→60)}= |b*(60°) - b*(0°)|. On observe les variations colorimétriques suivantes : Δa*_{(0→60}) < 4 Δb*_{(0→60}) < 2 pour a*(60°) < 0 et b*(60°) < 0.

Ainsi, pour un vitrage pour lequel a*(0°) est compris entre -6 et -3,5 et b*(0°) est compris entre -3 et 0, l'observation sous incidence de 60° donne une faible variation de couleur avec a*(60°) compris entre -4 et 0 et b*(60°) compris entre -4 et 0.

Le vitrage selon l'invention peut être muni d'un moyen de chauffage constitué par un réseau de fils conducteurs et notamment de fils torsadés ou par au moins une couche de matière conductrice ou par tout autre moyen.

L'homme du métier connaît à ce titre le brevet européen N° EP 496 669 qui lui enseigne une méthode de dépôt de fils conducteurs, notamment sur une feuille intercalaire d'un vitrage feuilleté. Il connaît par ailleurs du brevet européen N° EP 773 705 une amélioration de cette méthode et de la demande internationale de brevet N° WO 02/098176 une application particulière des ces méthodes à des vitres latérales de véhicules automobiles.

La puissance de chauffage du moyen de chauffage doit être d'au moins 400 ou 450 Watt/m², voire d'au moins 500 Watt/m² et est, de préférence de l'ordre de 600 watt/m². L'alimentation de ce moyen est, de préférence, directement opérée à partir de la batterie du véhicule qui délivre en général du courant continu à 12 V.

Le vitrage selon l'invention présente, de préférence une réflexion énergétique R_{E} comprise entre 20 et 40 % et notamment entre 25 et 38 %, mesurée d'une manière habituelle perpendiculairement au plan moyen du vitrage.

Avantageusement, lorsque l'empilement de couches minces étant déposé sur le substrat intérieur, ce substrat subit un traitement thermique à plus de 500°C en vu d'un bombage, avec après bombage une couleur en réflexion extérieure dans les bleus, dans les verts ou dans les bleu-verts.

Comme évoqué plus haut, une application particulièrement visée dans l'invention concerne les vitrages pour véhicule, notamment les pare-brise et les vitres latérales avants. Grâce à l'invention, les pare-brise et vitres latérales avants peuvent avoir des fonctions/propriétés antisolaires et chauffantes remarquables.

Un moyen de chauffage, qu'il soit constitué par un réseau de fils conducteurs ou par au moins une couche de matière conductrice, engendre une diminution d'environ 1,5 % de la transmission lumineuse par rapport à un vitrage identique ne comportant pas un tel moyen.

Confronté au problème exposé ci-dessus de conception d'un vitrage feuilleté pour véhicule intégrant un moyen de chauffage et un moyen à propriétés de réflexion dans l'infrarouge et/ou dans le rayonnement solaire, l'homme du métier peut chercher à concevoir un moyen à propriétés de réflexion dans l'infrarouge et/ou dans le rayonnement solaire spécifique répondant aux critères recherchés.

Toutefois, il s'avère qu'il serait plus judicieux de chercher à adapter un moyen à propriétés de réflexion dans l'infrarouge et/ou dans le rayonnement solaire existant de manière à ce qu'il réponde aux critères recherchés.

La présente invention se rapporte ainsi également à un procédé de réalisation d'un vitrage feuilleté pour véhicule comportant au moins une feuille de polymère thermoplastique intercalaire positionnée entre deux substrats, chaque substrat présentant ainsi respectivement une face tournée vers ladite feuille intercalaire, ledit vitrage présentant des propriétés de réflexion dans l'infrarouge et/ou dans le rayonnement solaire, caractérisé en ce qu'un moyen de chauffage présentant une puissance d'au moins 400 Watt/m², voire d'au moins 500 Watts/m² étant associé à la face (2), et un moyen à propriétés de réflexion dans l'infrarouge et/ou dans le rayonnement solaire étant associé à la face (3), ledit moyen à propriétés de réflexion dans l'infrarouge et/ou dans le rayonnement solaire est adapté de manière à ce que ledit vitrage présente une transmission lumineuse d'au moins 70 %, voire d'au moins 75 %.

En particulier, lorsque dans la production industrielle le moyen à propriétés de réflexion dans l'infrarouge et/ou dans le rayonnement solaire est constitué par un empilement de couches minces à deux couches fonctionnelles métalliques, notamment à base d'argent et est associé à la face (2) du vitrage, il est alors impératif de l'associer à la face (3) du vitrage.

Selon le procédé selon l'invention, il apparaît possible de parvenir au but recherché, lorsque le moyen à propriétés de réflexion dans l'infrarouge et/ou dans le rayonnement solaire est constitué par un empilement de couches minces à deux couches fonctionnelles métalliques, notamment à base d'argent, en augmentant l'épaisseur de la première couche fonctionnelle métallique en partant du substrat et en diminuant l'épaisseur de la seconde couche fonctionnelle métallique, de préférence sans modifier les épaisseurs des autres couches. Toutefois, l'augmentation de l'épaisseur de la première couche fonctionnelle métallique est de préférence inférieure, en valeur absolue, à la diminution de l'épaisseur de la seconde couche fonctionnelle métallique.

Selon le procédé selon l'invention, il apparaît également possible de parvenir au but recherché, cumulativement ou alternativement aux solutions précédentes, lorsque le moyen à propriétés de réflexion dans l'infrarouge et/ou dans le rayonnement solaire est constitué par un empilement de couches minces à deux couches fonctionnelles métalliques, notamment à base d'argent, en diminuant l'épaisseur d'au moins une couche absorbante C disposée juste au-dessous d'une couche fonctionnelle métallique, et de préférence diminuant l'épaisseur de toutes les couches absorbantes C disposées juste au-dessous de chaque couche fonctionnelle métallique.

L'invention sera décrite à présent de façon plus détaillée à l'aide des exemples suivants non limitatifs, en référence aux figures annexées :
- la figure 1 illustre une vue éclatée en coupe transversale d'une première variante de réalisation de l'invention ;
- la figure 2 illustre une vue éclatée en coupe transversale d'une variante hors invention ;
- la figure 3 illustre les variations des valeurs a* et b* lors de la modification des épaisseurs respectivement des trois couches à base de nitrure de silicium Si1, Si2 et Si3, ainsi que des deux couches d'argent Ag1 et Ag2 d'un exemple de base ;
- la figure 4 illustre les variations des valeurs de T_{L} et R_{E} lors de la modification des épaisseurs respectivement des deux couches d'argent Ag1 et Ag2 de l'exemple de base ; et
- la figure 5 illustre les variations des valeurs a* et b* lors de la modification des épaisseurs respectivement des deux couches d'argent Ag1 et Ag2 de l'exemple de base.

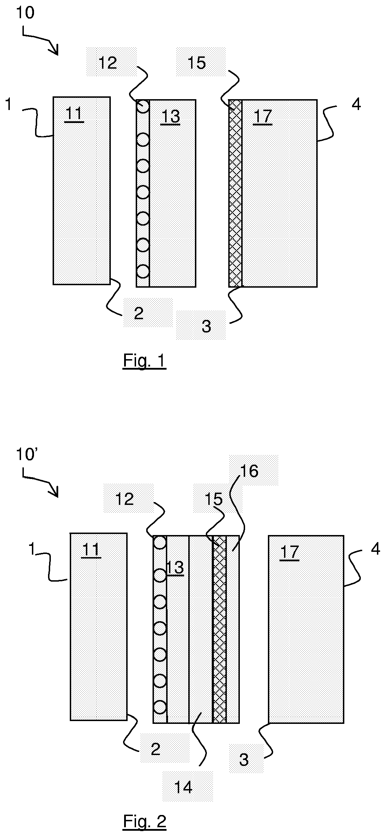

est précisé que les proportions entre les divers éléments représentés aux figures 1 et 2 ne sont pas rigoureusement respectées dans ces figures afin d'en faciliter la lecture.

Les figures 1 et 2 illustrent, respectivement, un vitrage feuilleté (10, 10') constitué de deux substrats individuels, le substrat extérieur (11) et le substrat intérieur (17), d'environ 2,1 mm d'épaisseur chacun, qui sont de façon connue assemblés l'un à l'autre par collage avec interposition d'une feuille intercalaire thermoplastique (13) en polyvinyl butyral de 0,76 mm d'épaisseur par exemple. Ce vitrage est pourvu de fils cylindrique de chauffage (12) en cuivre laqué, qui sont disposés à l'intérieur du vitrage feuilleté (10) et dont le diamètre vaut environ 85 µm.

Ces fils de chauffage (12) sont disposés parallèlement les uns aux autres et s'étendent entre l'arête supérieure et l'arête inférieure du vitrage. Suivant une méthode connue, les fils de chauffage (12) ont été posés avant la fabrication du vitrage composite sur la feuille adhésive thermoplastique (13). Les fils de chauffage individuels (12) présentent un écartement mutuel de 2 mm à 15 mm par exemple.

Les fils de chauffage (12) sont raccordés en parallèle à deux barrettes collectrices de courant (non illustrées), qui sont disposées à faible distance du bord inférieur, respectivement supérieur, du vitrage feuilleté. Pour le raccordement des barrettes collectrices de courant au réseau électrique de bord, on se sert de leurs portions d'extrémité menées latéralement hors du vitrage feuilleté. Entre les barrettes collectrices de courant se trouve donc usuellement une tension électrique de 12 V. Le courant fourni est adapté à la puissance de chauffage nécessaire par unité de surface, pour laquelle il faut tenir compte de la résistance électrique des fils de chauffage ainsi que de leur distance mutuelle.

La fabrication du vitrage feuilleté (10) représenté sur la figure 1 se passe de la manière suivante : les deux substrats individuels (11) et (17) sont découpés de la façon habituelle et cintrés à la forme désirée. Indépendamment de cela, on prépare la feuille adhésive thermoplastique (13) avec les barrettes collectrices et les fils de chauffage (12). A cet effet, on dépose les fils de chauffage (12) sur la feuille de butyral de polyvinyle qui sont fixés à la surface de la feuille en utilisant la chaleur et la pression. La pose des fils de chauffage (12) peut se faire par exemple avec un dispositif, qui est décrit dans le document DE 195 41 427 A1. Après la coupe des portions d'extrémité des fils de chauffage dépassant éventuellement hors du champ de chauffage enclavé entre les barrettes collectrices de courant, la couche adhésive thermoplastique est préparée pour le traitement ultérieur.

La feuille adhésive ainsi préparée est réunie aux deux substrats individuels (11) et (17), dont l'un, le substrat intérieur (17) est porteur d'un empilement de couches minces (16) et l'air est éliminé de l'ensemble stratifié de façon connue par un traitement sous dépression. L'ensemble stratifié est alors définitivement assemblé dans un autoclave à une température d'environ 140°C et sous une pression d'environ 12 bar.

La fabrication du vitrage feuilleté (10') représenté sur la figure 2 se passe de même manière que précédemment, à ceci près que ce n'est pas le substrat intérieur (17) qui est porteur d'un empilement de couches minces (16), mais une feuille de polymère (14), par exemple en polyéthylène. Cette feuille est alors enserrée entre la première feuille adhésive thermoplastique (13) et une seconde feuille adhésive thermoplastique (15).

Les couches adhésives (13, 15) ainsi préparées sont réunies aux deux substrats individuels (11) et (17), et l'air est éliminé de l'ensemble stratifié de façon connue par un traitement sous dépression. L'ensemble stratifié est alors définitivement assemblé dans un autoclave et sous une pression.

Un exemple de mise en oeuvre du procédé d'adaptation selon l'invention d'un vitrage feuilleté à empilement de couches minces comportant au moins une couche fonctionnelle métallique à propriétés de réflexion dans l'infrarouge et/ou dans le rayonnement solaire afin que ce vitrage puisse intégrer un moyen de chauffage est donné ci-après.

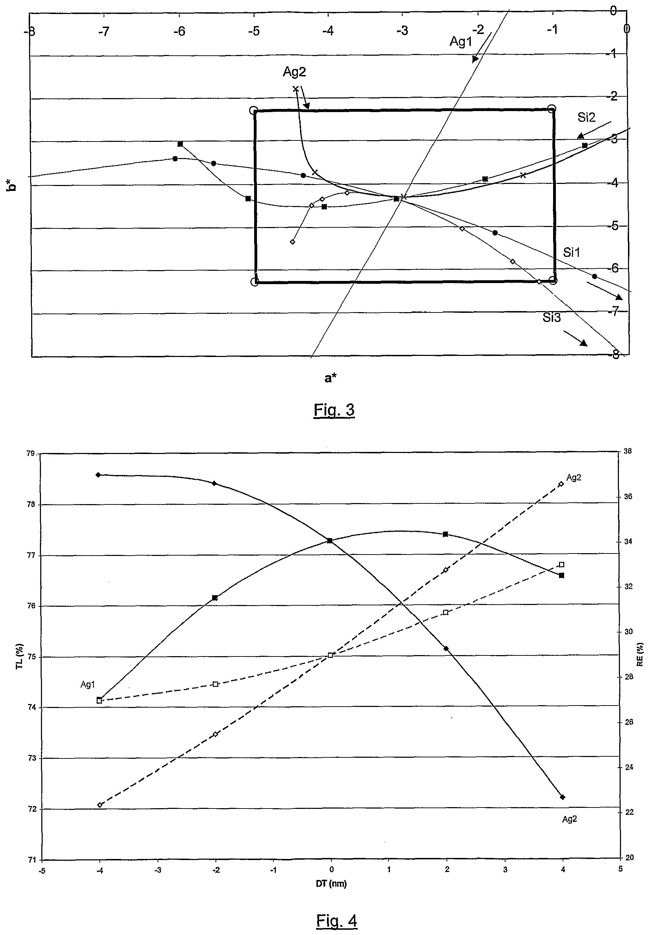

Dans un premier temps, on a cherché à optimiser les différentes épaisseurs de l'empilement, afin d'obtenir des caractéristiques optiques de T_{L} et R_{E} supérieures à celles généralement nécessaires au niveau commercial, tout en conservant des caractéristiques proches, c'est-à-dire une T_{L} supérieure à 77 %, une R_{E} supérieure à 28 %, et des couleurs a* et b* en réflexion conservées dans un cadre visible sur la figure 3 (teintes bleu-vert).

Dans tous les exemples suivants, les couches sont déposées par pulvérisation cathodique assistée par champ magnétique, sur un verre clair silico-sodo-calcique de 2,1 mm d'épaisseur de type Planilux (verre commercialisé par Saint-Gobain Glass).

Les couches à base de nitrure de silicium sont déposées à partir de cibles de Si dopé Al ou B en atmosphère nitrurante. Les couches à base d'Ag sont déposées à partir de cibles Ag en atmosphère inerte, et les couches à base de Ti à partir de cible de Ti en atmosphère inerte également. Les couches en ZnO sont déposées à partir de cibles de Zn contenant de 1 à 4 % d'AI en poids. Celles situées en dessous des couches d'Ag ont une stoechiométrie en oxygène standard, celles déposées directement sur les couches d'argent sont légèrement sous stoechiométriques en oxygène tout en restant transparentes dans le visible, le contrôle de la stoechiométrie s'effectuant par P.E.M.

### Exemple de base

Cet exemple a trait à l'empilement suivant :

Verre/Si₃N₄:Al/ZnO:Al/Ti/Ag/ZnO₁₋ₓAl/Si₃N₄:Al/ ZnO:Al/Ti/Ag/ZnO₁₋ₓ:Al/ Si₃N₄:Al

Si₃N₄:Al signifie que le nitrure contient de l'aluminium. Il en est de même pour ZnO:Al. ZnO₁₋ₓ:Al signifie en outre que l'oxyde est déposé en légère sous stoechiométrie d'oxygène, sans être absorbant dans le visible.

Cet empilement a été mis en oeuvre selon la première variante de l'invention, illustrée figure 1 : il a été déposé sur un substrat intérieur (17) en verre clair silico-sodo-calcique de 2,1 mm d'épaisseur de type Planilux et a ensuite été associé à une feuille intercalaire (13) en PVB de 0,76 mm d'épaisseur puis à un substrat extérieur (18) en verre clair silico-sodo-calcique également de 2,1 mm d'épaisseur de type Planilux.

Le tableau 1 suivant récapitule l'empilement de couches, avec les épaisseurs indiquées en nanomètres pour l'exemple de base :

**Tableau 1**

| verre | Exemple de base | Désignation |
|---|---|---|
| Si₃N₄:Al | 27 nm | Si1 |
| ZnO:Al | 10 nm | |
| Ti | 0,4 nm | |
| Ag | 7,6 nm | Ag1 |
| ZnO₁₋ₓ:Al | 10 nm | |
| Si₃N₄:Al | 74 nm | Si2 |
| ZnO:Al | 10 nm | |
| Ti | 0,4 nm | |
| Ag | 11,4 nm | Ag2 |
| ZnO₁₋ₓ:Al | 10 nm | |
| Si₃N₄:Al | 30 nm | Si3 |

### Optimisation de l'exemple de base

La modification des épaisseurs T respectivement des trois couches à base de nitrure de silicium Si1, Si2 et Si3, ainsi que des deux couches d'argent Ag1 et Ag2 a été testé pour chaque couche.

Les valeurs obtenues à cette première étape ont été retranscrites sur les figures 3 à 5 afin de les rendre plus facilement interprétables.

La figure 3 illustre les conséquences de la modification des épaisseurs respectivement des trois couches à base de nitrure de silicium Si1, Si2 et Si3, ainsi que des deux couches d'argent Ag1 et Ag2.

Le point central indique les valeurs obtenues pour l'exemple de base ci-dessus et les flèches indiquent le sens de l'augmentation de l'épaisseur.

On peut constater sur cette figure qu'une certaine marge de manoeuvre est possible pour les épaisseurs des couches Si1, Si2, Si3 et Ag2, tout en restant dans les couleurs en réflexion souhaitée, mais que par contre une modification de l'épaisseur de Ag1 risque de faire sortir rapidement du cadre de couleurs souhaitées.

La figure 4 illustre les conséquences de la variation des épaisseurs (DT) pour les deux couches d'argent Ag1 en traits clairs et Ag2 en traits sombres, sur la transmission lumineuse T_{L} en trait pleins et sur la réflexion énergétique R_{E} en traits pointillés.

On peut constater sur cette figure qu'une augmentation de la T_{L} peut être obtenue en diminuant (DT négatif) l'épaisseur de Ag2, ainsi qu'en augmentant celle de Ag1 (DT positif) et qu'une augmentation de la R_{E} peut être obtenue en augmentant l'épaisseur de Ag1.

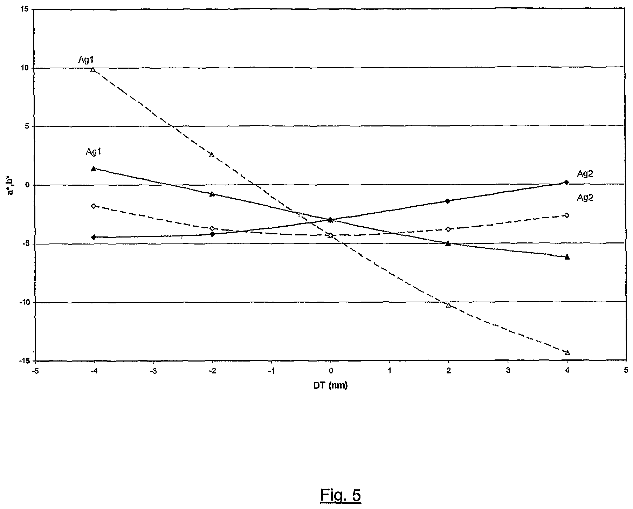

La figure 5 illustre les conséquences de la variation des épaisseurs (DT) pour les deux couches d'argent Ag1 en traits clairs et Ag2 en traits sombres, sur a* en trait pleins et sur b* en traits pointillés.

On peut constater sur cette figure que les variations d'épaisseur d'Ag2 n'ont que peu d'influence sur les valeurs a* et b*, qui restent toutes les deux quasiment tout le temps négatives et qu'une augmentation de Ag1 permet de conserver des valeurs a* et b* toutes les deux négatives mais qu'une diminution de Ag1 engendre des valeurs a* et surtout b*, inacceptables car positives.

A la lecture de ces trois figures, il apparaît qu'une diminution de l'épaisseur de Ag2 et une augmentation de l'épaisseur de Ag1 peut permettre d'améliorer les caractéristiques de transmission lumineuse et réflexion énergétique sans entraîner de variation colorimétrique importante.

Une optimisation a ensuite été réalisée avec des valeurs d'épaisseurs spécifiques pour Si1, Si2, Si3 et Ag2. Les résultats obtenus sont illustrés dans le tableau 2 ci-après :

**Tableau 2**

| | T (nm) | DT (nm) | T_{L} (%) | R_{E} (%) | a* (D65/10°) | b* (D65/10°) | R_{□}(Ohm /□) |
|---|---|---|---|---|---|---|---|
| Si1 | 23,0 | -4,0 | 76,2 | 30,5 | -4,3 | -5,1 | 3,5 |
| | 25,0 | -2,0 | 76,4 | 30,4 | -3,4 | -4,8 | 3,5 |
| | 27,0 | 0,0 | 76,4 | 30,1 | -2,3 | -4,3 | 3,5 |
| | 29,0 | 2,0 | 77,1 | 29,9 | -1,8 | -3,7 | 3,5 |
| | 31,0 | 4,0 | 76,5 | 30,2 | -0,5 | -3,9 | 3,6 |
| Si2 | 70,0 | -4,0 | 76,6 | 30,5 | -2,4 | -6,6 | 3,5 |
| | 72,0 | -2,0 | 76,0 | 30,2 | -1,6 | -3,7 | 3,6 |
| | 74,0 | 0,0 | 76,7 | 30,3 | -2,3 | -4,2 | 3,4 |
| | 76,0 | 2,0 | 75,8 | 30,1 | -3,2 | -4,3 | 3,5 |
| | 78,0 | 4,0 | 75,9 | 29,9 | -4,2 | -4,4 | 3,4 |
| Si3 | 24,0 | -6,0 | 75,2 | 30,6 | -3,4 | -2,5 | 3,5 |
| | 27,0 | -3,0 | 76,1 | 30,0 | -2,7 | -3,4 | 3,6 |
| | 30,0 | 0,0 | 76,9 | 30,7 | -2,5 | -4,6 | 3,5 |
| | 33,0 | 3,0 | 77,1 | 30,1 | -1,7 | -5,9 | 3,6 |
| | 36,0 | 6,0 | 77,6 | 29,9 | -0,9 | -7,5 | 3,5 |
| Ag2 | 9,6 | 0,0 | 78,3 | 26,6 | -3,7 | -4,6 | 4,1 |
| | 9,8 | 0,2 | 77,2 | 27,3 | -3,5 | -4,7 | 4,2 |
| | 10,0 | 0,4 | 77,9 | 27,7 | -3,5 | -4,6 | 4,2 |
| | 10,2 | 0,6 | 78,1 | 27,8 | -3,4 | -4,4 | 3,9 |
| | 10,6 | 1,0 | 77,5 | 28,4 | -2,7 | -4,5 | 3,8 |
| | 11,0 | 1,4 | 77,1 | 29,7 | -2,8 | -4,6 | 3,7 |
| | 11,4 | 1,8 | 76,2 | 29,4 | -2,7 | -4,3 | 3,7 |

Ces mesures valident effectivement la possibilité de diminuer l'épaisseur de Ag2 et d'augmenter l'épaisseur de Ag1 pour améliorer les caractéristiques de transmission lumineuse et réflexion énergétique sans entraîner de variation colorimétrique importante.

Plus particulièrement, une diminution de l'épaisseur de Ag2 entre 0,4nm et 1,2 nm, c'est-à-dire entre 4% et 11 % des conditions de l'exemple de base mène aux valeurs souhaitées. Cette diminution peut être menée en parallèle à une augmentation de l'épaisseur de Ag1 de 0,5 nm, soit 7 % de l'épaisseur de l'exemple de base.

Ces mesures infirment par ailleurs la possibilité de faire varier les épaisseurs de Si1, Si2 et Si3 pour obtenir un effet similaire : la couleur reste bleue, mais elle en dehors de la boîte de couleur visée.

Par ailleurs, il a été constaté que les modifications d'épaisseur des couches d'argent n'entraînaient pas de modification majeure des caractéristiques mécaniques de l'empilement.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage feuilleté (10) pour véhicule comportant au moins une feuille de polymère thermoplastique intercalaire (13, 16) positionnée entre deux substrats (11, 17), chaque substrat présentant ainsi respectivement une face (2, 3) tournée vers ladite feuille intercalaire (13, 16), ledit vitrage présentant des propriétés de réflexion dans l'infrarouge et/ou dans le rayonnement solaire, **caractérisé en ce qu'**un moyen de chauffage (12) présentant une capacité de puissance d'au moins 400 Watt/m², voire d'au moins 500 Watts/m² est positionné contre la face de la feuille intercalaire qui est orientée vers l'extérieur, **en ce qu'**un moyen (15) à propriétés de réflexion dans l'infrarouge et/ou dans le rayonnement solaire est positionné sur la face interne du substrat intérieur (17) **et en ce que** ledit vitrage présente une transmission lumineuse d'au moins 70 %, voire d'au moins 75 %.

2. Vitrage (10) selon la revendication 1, **caractérisé en ce que** ledit moyen (15) est constitué d'un empilement de couches minces comportant une alternance de n couches fonctionnelles A à propriétés de réflexion dans l'infrarouge et/ou dans le rayonnement solaire, notamment métalliques, et de (n + 1) revêtements B avec n ≥ 1, lesdits revêtements B comportant une ou une superposition de couches en matériau diélectrique de manière à ce que chaque couche fonctionnelle soit disposée entre deux revêtements B.

3. Vitrage (10) selon la revendication précédente, **caractérisé en ce que** la (ou au moins une des) couche(s) fonctionnelle(s) A est en contact avec le revêtement diélectrique B disposé au-dessous et/ou au-dessus d'elle par l'intermédiaire d'une couche C absorbante au moins dans le visible, du type métallique éventuellement nitrurée.

4. Vitrage (10) selon la revendication précédente, **caractérisé en ce que** l'épaisseur de la (ou de chacune des) couche(s) absorbante(s) C est inférieure ou égale à 1 nm, notamment inférieure ou égale à 0,7 ou 0,6 ou 0,5 nm.

5. Vitrage (10) selon la revendication 3 ou la revendication 4, **caractérisé en ce que** la (ou au moins une) couche absorbante C est à base de titane, de nickel, de chrome, de niobium, de zirconium, ou d'un alliage métallique contenant au moins l'un de ces métaux.

6. Vitrage (10) selon l'une quelconque des revendications 2 à 5, **caractérisé en ce que** n ≥ 2, et **en ce que** l'épaisseur de chaque couche fonctionnelle A est sensiblement identique et est inférieure à 15 nm.

7. Vitrage (10) selon l'une quelconque des revendications 2 à 6, **caractérisé en ce que** la (ou au moins une) couche fonctionnelle A est à base d'argent ou d'alliage d'argent, notamment d'alliage d'argent avec du palladium et/ou du titane.

8. Vitrage (10) selon l'une quelconque des revendications précédentes, **caractérisé en ce que** ledit moyen de chauffage (12) est constitué par un réseau de fils conducteurs et notamment de fils torsadés.

9. Vitrage (10) selon l'une quelconque des revendications 1 à 8, **caractérisé en ce que** ledit moyen de chauffage (12) est constitué par au moins une couche de matière conductrice.

10. Vitrage (10) selon l'une quelconque des revendications précédentes, **caractérisé en ce qu'**il présente une réflexion énergétique comprise entre 20 et 40 % et notamment entre 25 et 38 %.

11. Vitrage (10) selon l'une quelconque des revendications 2 à 10, **caractérisé en ce que** l'empilement comprend la séquence de couches suivantes :
ZnO/Ti/Ag/ZnO
avec notamment un des empilements complets suivants :
Si₃N₄/ZnO/Ti/Ag/ZnO/Si₃N₄/ZnO/Ti/Ag/ZnO/Si₃N₄
ZnO/Ti/Ag/ZnO/Si₃N₄/ZnO/Ti/Ag/ZnO/Si₃N₄
ZnO/Ti/Ag/ZnO/Ti/Ag/ZnO/Si₃N₄
Si₃N₄/ZnO/Ti/Ag/ZnO/Ti/Ag/ZnO/Si₃N₄
les couches de Si₃N₄ et/ou de ZnO pouvant contenir un élément ou un métal minoritaire par rapport au Si ou à Zn du type Al ou du bore.

12. Vitrage (10) selon l'une quelconque des revendications 2 à 11, **caractérisé en ce que** l'empilement de couches minces étant déposé sur le substrat (17), ce substrat subit un traitement thermique à plus de 500°C en vu d'un bombage, avec après bombage une couleur en réflexion extérieure dans les bleus, dans les verts ou dans les bleu-verts.

13. Application du vitrage (10) selon l'une quelconque des revendications précédentes en tant que pare-brise ou vitre latérale avant de véhicule automobile, ledit vitrage étant à fonction anti-solaire et chauffant.

## Patentansprüche

1. Beschichtete Verglasung (10) für Fahrzeug, umfassend mindestens eine Zwischenschicht aus thermoplastischem Polymer (13, 16), die zwischen zwei Substraten (11, 17) positioniert ist, wobei jedes Substrat somit jeweils mit einer Seite (2, 3) der Zwischenschicht (13, 16) zugewandt ist, wobei die Verglasung Reflektionseigenschaften im Infrarot- und/oder im Sonnenstrahlenbereich aufweist, **dadurch gekennzeichnet, dass** ein Heizmittel (12), das eine Leistung von mindestens 400 Watt/m² bzw. mindestens 500 Watt/m² aufweist, gegen die Seite der nach außen gerichteten Zwischenschicht positioniert ist, **dadurch,** dass ein Mittel (15) mit Reflektionseigenschaften im Infrarot- und/oder im Sonnenstrahlenbereich auf der Innenseite des inneren Substrats (17) positioniert ist, **und dadurch,** dass die Verglasung eine Lichtübertragung von mindestens 70 % bzw. mindestens 75 % aufweist.

2. Verglasung (10) nach Anspruch 1, **dadurch gekennzeichnet, dass** das Mittel (15) aus einem Stapel aus dünnen Schichten gebildet ist, umfassend eine Aufeinanderfolge von n funktionellen, insbesondere metallischen, Schichten A mit Reflektionseigenschaften im Infrarot- und/oder im Sonnenstrahlenbereich, und von (n + 1) Beschichtungen B mit n ≥ 1, wobei die Beschichtungen B eine oder eine Überlagerung von Schichten aus dielektrischem Material umfassen, so dass jede funktionelle Schicht zwischen zwei Beschichtungen B angeordnet ist.

3. Verglasung (10) nach dem vorhergehenden Anspruch, **dadurch gekennzeichnet, dass** die (oder mindestens eine der) funktionelle(n) Schicht(en) A in Kontakt mit der dielektrischen Beschichtung B steht/stehen, die unter und/oder über ihr durch eine Schicht C metallischer Art, möglicherweise nitriert, angeordnet ist, die mindestens im sichtbaren Bereich absorbierend ist.

4. Verglasung (10) nach dem vorhergehenden Anspruch, **dadurch gekennzeichnet, dass** die Stärke der (oder jeder der) absorbierenden Schicht(en) kleiner als oder gleich 1 nm, insbesondere kleiner als oder gleich 0,7 oder 0,6 oder 0,5 nm ist.

5. Verglasung (10) nach Anspruch 3 oder Anspruch 4, **dadurch gekennzeichnet, dass** die (oder mindestens eine) absorbierende Schicht C auf Titan, Nickel, Chrom, Niobium, Zirconium oder einer metallischen Legierung, enthaltend mindestens eines dieser Metalle, basiert.

6. Verglasung (10) nach einem der Ansprüche 2 bis 5, **dadurch gekennzeichnet, dass** n ≥ 2 ist, und dadurch, dass die Stärke jeder funktionellen Schicht A im Wesentlichen identisch ist und kleiner als 15 nm ist.

7. Verglasung (10) nach einem der Ansprüche 2 bis 6, **dadurch gekennzeichnet, dass** die (oder mindestens eine) funktionelle Schicht A auf Silber oder einer Silberlegierung, insbesondere einer Silberlegierung mit Palladium und/oder Titan, basiert.

8. Verglasung (10) nach einem der vorhergehenden Ansprüche, **dadurch gekennzeichnet, dass** das Heizmittel (12) aus einem Netz von leitenden Drähten und insbesondere verdrillten Drähten gebildet ist.

9. Verglasung (10) nach einem der Ansprüche 1 bis 8, **dadurch gekennzeichnet, dass** das Heizmittel (12) aus mindestens einer Schicht aus leitendem Material gebildet ist.

10. Verglasung (10) nach einem der vorhergehenden Ansprüche, **dadurch gekennzeichnet, dass** sie eine energetische Reflektion aufweist, die zwischen 20 und 40 % und insbesondere zwischen 25 und 38 % liegt.

11. Verglasung (10) nach einem der Ansprüche 2 bis 10, **dadurch gekennzeichnet, dass** der Stapel die folgende Reihenfolge von Schichten umfasst:
ZnO/Ti/Ag/ZnO
mit insbesondere einem der folgenden vollständigen Stapel:
Si₃N₄/ZnO/Ti/Ag/ZnO/Si₃N₄/ZnO/Ti/Ag/ZnO/Si₃N₄
ZnO/Ti/Ag/ZnO/Si₃N₄/ZnO/Ti/Ag/ZnO/Si₃N₄
ZnO/Ti/Ag/ZnO/Ti/Ag/ZnO/Si₃N₄
Si₃N₄/ZnO/Ti/Ag/ZnO/Ti/Ag/ZnO/Si₃N₄
wobei die Schichten aus Si₃N₄ und/oder ZnO ein Minoritätselement oder -metall im Verhältnis zu Si oder zu Zn vom Typ Al oder Bor enthalten können.

12. Verglasung (10) nach einem beliebigen der Ansprüche 2 bis 11, **dadurch gekennzeichnet, dass,** wenn der Stapel aus dünnen Schichten auf dem Substrat (17) angeordnet ist, dieses Substrat einer thermischen Behandlung von mehr als 500 °C für eine Biegung unterzogen wird, wobei nach der Biegung eine äußere Reflektionsfarbe im Blau-, im Grün- und im Blaugrünbereich vorhanden ist.

13. Anwendung der Verglasung (10) nach einem der vorhergehenden Ansprüche als Windschutzscheibe oder vorderes Seitenfenster eines Kraftfahrzeugs, wobei die Verglasung eine Sonnenschutz- und Heizfunktion hat.

## Claims

1. Laminated glazing (10) for vehicles, comprising at least one interlayer sheet (13, 16) of thermoplastic polymer positioned between two substrates (11, 17), each substrate thus having a respective face (2, 3) turned toward said interlayer sheet (13, 16), said glazing having reflection properties in the infrared and/or in solar radiation, **characterized in that** a heating means (12) having a power density of at least 400 W/m², or even at least 500 W/m², is positioned against the face of the interlayer sheet which is turned toward the outside, **in that** a means (15) having reflection properties in the infrared and/or in solar radiation is positioned on the internal face of the inner substrate (17) **and in that** said glazing has a light transmission of at least 70%, or even at least 75%.

2. The glazing (10) as claimed in claim 1, **characterized in that** said means (15) consists of a thin-film multilayer comprising an alternation of n functional layers A having reflection properties in the infrared and/or in solar radiation, especially metal layers, and (n + 1) coatings B where n ≥ 1, said coatings B comprising a dielectric layer or a superposition of dielectric layers so that each functional layer is placed between two coatings B.

3. The glazing (10) as claimed in the preceding claim, **characterized in that** the functional layer (A) (or at least one of the functional layers A) is in contact with the dielectric coating B placed below and/or above it via a layer C that absorbs at least in the visible, of the metallic, and optionally nitrided, type.

4. The glazing (10) as claimed in the preceding claim, **characterized in that** the thickness of the (or each) absorbent layer C does not exceed 1 nm, especially does not exceed 0.7 or 0.6 or 0.5 nm.

5. The glazing (10) as claimed in claim 3 or claim 4, **characterized in that** the (or at least one) absorbent layer C is based on titanium, nickel, chromium, niobium or zirconium, or on a metal alloy containing at least one of these metals.

6. The glazing (10) as claimed in any one of claims 2 to 5, **characterized in that** n ≥ 2 and **in that** the thickness of each functional layer A is approximately the same and is less than 15 nm.

7. The glazing (10) as claimed in any one of claims 2 to 6, **characterized in that** the (or at least one) functional layer A is based on silver or a silver alloy, especially an alloy of silver with palladium and/or titanium.

8. The glazing (10) as claimed in any one of the preceding claims, **characterized in that** said heating means (12) consists of an array of conducting wires and especially an array of twisted wires.

9. The glazing (10) as claimed in any one of claims 1 to 8, **characterized in that** said heating means (12) consists of at least one layer of conductive material.

10. The glazing (10) as claimed in any one of the preceding claims, **characterized in that** it has an energy reflection of between 20 and 40% and especially between 25 and 38%.

11. The glazing (10) as claimed in any one of claims 2 to 10, **characterized in that** the multilayer comprises the following sequence of layers:
ZnO/Ti/Ag/ZnO
with in particular one of the following complete multilayers:
Si₃N₄/ZnO/Ti/Ag/ZnO/Si₃N₄/ZnO/Ti/Ag/ZnO/Si₃N₄
ZnO/Ti/Ag/ZnO/Si₃N₄/ZnO/Ti/Ag/ZnO/Si₃N₄
ZnO/Ti/Ag/ZnO/Ti/Ag/ZnO/Si₃N₄
Si₃N₄/ZnO/Ti/Ag/ZnO/Ti/Ag/ZnO/Si₃N₄
it being possible for the Si₃N₄ and/or ZnO layers to contain an element or a metal, in a minor amount relative to the Si or Zn, of the Al or boron type.

12. The glazing (10) as claimed in any one of claims 2 to 11, **characterized in that**, after the thin-film multilayer has been deposited on the substrate (17), the latter undergoes a heat treatment at above 500°C for the purpose of bending it, so as, after bending, to have a color in external reflection in the blues, in the greens or in the blue-greens.

13. Application of the glazing (10) as claimed in any one of the preceding claims as a windshield or the front side windows of a motor vehicle, said glazing having a solar-protection and heating function.
